# EUROPEAN PATENT APPLICATION

(11) **EP 4 517 949 A1**
(43) Date of publication of application: **05.03.2025**
(21) Application number: 23796536.3
(22) Date of filing: 28.04.2023
(51) Int. Cl.: H01M 50/143, B32B 5/28, B32B 27/18, B32B 27/20, C08J 5/04, H01M 50/117, H01M 50/119, H01M 50/121, H01M 50/122, H01M 50/124, H01M 50/126, H01M 50/131

(54) **LAMINATE, BATTERY CASE FOR NON-AQUEOUS ELECTROLYTE SECONDARY BATTERY, AND NON-AQUEOUS ELECTROLYTE SECONDARY BATTERY**

(30) Priority: 28.04.2022 JP 2022074742; 16.02.2023 JP 2023022426
(71) Applicant: Mitsui Chemicals, Inc., Tokyo 104-0028 (JP)
(72) Inventor: SHIRAISHI Koji, Ichihara-shi, Chiba 299-0108 (JP); AWANO Toshihiro, Ichihara-shi, Chiba 299-0108 (JP); KOMATSUBARA Masashi, Ichihara-shi, Chiba 299-0108 (JP); IWATA Toshio, Tokyo 104-0028 (JP); HE Jiacheng, Sodegaura-shi, Chiba 299-0265 (JP); FUJITA Daisuke, Ichihara-shi, Chiba 299-0108 (JP); FUJIHARA Kazutoshi, Sodegaura-shi, Chiba 299-0265 (JP)
(74) Representative: Hoffmann Eitle
(86) International application number: PCT/JP2023/016841
(87) International publication number: WO 2023/210801

(57) **Abstract**

The present invention provides: a laminate including a flame retardant layer and a fiber-reinforced resin layer, wherein the flame retardant layer contains 20% by mass to 80% by mass of a thermoplastic resin based on the total mass of the flame retardant layer, and 20% by mass to 80% by mass of at least one flame retardant selected from the group consisting of a phosphorus-based flame retardant, a bromine-based flame retardant, and an inorganic hydrate-based flame retardant based on the total mass of the flame retardant layer, and has a content of reinforcing fibers of 0% by mass to 20% by mass based on the total mass of the flame retardant layer, and the fiber-reinforced resin layer contains 30% by mass to 90% by mass of a thermoplastic resin based on the total mass of the fiber-reinforced resin layer, and 10% by mass to 70% by mass of reinforcing fibers based on the total mass of the fiber-reinforced resin layer; a battery case for a non-aqueous electrolyte secondary battery; and a non-aqueous electrolyte secondary battery including the same.

## Description

### Technical Field

The present invention relates to a laminate, a battery case for a non-aqueous electrolyte secondary battery, and a non-aqueous electrolyte secondary battery.

### Background Art

In order to reduce CO₂ emissions during automobile driving and to achieve longer mileage for electric vehicles and others, vehicle weight reduction is required more than ever before. From the viewpoint of improving weight reduction, it is conceivable to reduce the amount of metals used in battery packs and battery modules, or to use resin materials.

Meanwhile, the safety of electric vehicles is also required to be improved more than ever before. For example, in various types of batteries, as typified by lithium batteries, batteries may ignite due to internal short circuit, overcharging, external foreign matter penetration, external overheating, abnormal heat generation, or other reasons.

As a battery case for a vehicle made of a carbon fiber-reinforced polypropylene resin that combines flame retardancy, electromagnetic wave-shielding properties, and excellent mechanical characteristics, for example, Patent Literature 1 discloses a battery case for a vehicle, characterized in that it is formed by molding a carbon fiber-reinforced polypropylene resin composition in which, per 100 parts by weight of a polypropylene resin (A), 8 to 70 parts by weight of carbon fibers (B) and 0.6 to 37.5 parts by weight of a flame retardant (C) are compounded, and that the weight-average fiber length of carbon fibers in the molded product is 0.5 mm or more and less than 3 mm.

### Citation List

### Patent Literature

Patent Literature 1: JP2014-62189A

### Summary of Invention

### Technical Problem

According to investigations by the present inventors, it was found that adding a flame retardant to a fiber-reinforced material (fiber-reinforced resin) suppresses improvement in flame retardancy and makes it difficult to obtain sufficient flame retardancy compared to the case where a flame retardant is added to a resin that is not fiber-reinforced. In addition, as for the battery case described in Patent Literature **1,** although the flame retardancy of the battery case for a vehicle is improved, the flame retardancy is not sufficient, and further improvement in flame retardancy is required.

The problem to be solved by one embodiment according to the present invention is to provide a laminate with excellent flame retardancy while containing reinforcing fibers, as well as a battery case for a non-aqueous electrolyte secondary battery and a non-aqueous electrolyte secondary battery including the same.

### Solution to Problem

Means to solve the above problem include the following aspects.
<1> A laminate including a flame retardant layer and a fiber-reinforced resin layer, wherein
   the flame retardant layer contains 20% by mass to 80% by mass of a thermoplastic resin based on the total mass of the flame retardant layer, and 20% by mass to 80% by mass of at least one flame retardant selected from the group consisting of a phosphorus-based flame retardant, a bromine-based flame retardant, and an inorganic hydrate-based flame retardant based on the total mass of the flame retardant layer, and has a content of reinforcing fibers of 0% by mass to 20% by mass based on the total mass of the flame retardant layer, and
   the fiber-reinforced resin layer contains 30% by mass to 90% by mass of a thermoplastic resin based on the total mass of the fiber-reinforced resin layer, and 10% by mass to 70% by mass of reinforcing fibers based on the total mass of the fiber-reinforced resin layer.
<2> The laminate according to <1>, wherein the content of reinforcing fibers contained in the fiber-reinforced resin layer is larger than the content of reinforcing fibers contained in the flame retardant layer by 10% by mass or more.
<3> The laminate according to <1> or <2>, wherein the content of at least one flame retardant selected from the group consisting of a phosphorus-based flame retardant, a bromine-based flame retardant, and an inorganic hydrate-based flame retardant in the fiber-reinforced resin layer is 0% by mass or more and less than 20% by mass based on the total mass of the fiber-reinforced resin layer.
<4> The laminate according to any one of <1> to <3>, wherein the flame retardant layer contains 40% by mass to 80% by mass of the flame retardant based on the total mass of the flame retardant layer, and
   the fiber-reinforced resin layer contains 40% by mass to 60% by mass of the reinforcing fibers based on the total mass of the fiber-reinforced resin layer, and has a content of at least one flame retardant selected from the group consisting of a phosphorus-based flame retardant, a bromine-based flame retardant, and an inorganic hydrate-based flame retardant of 0% by mass to 10% by mass based on the total mass of the fiber-reinforced resin layer.
<5> The laminate according to any one of <1> to <4>, wherein the fiber-reinforced resin layer contains at least one resin selected from the group consisting of a polypropylene resin and a polyamide resin as the thermoplastic resin.
<6> The laminate according to any one of <1> to <5>, wherein the reinforcing fibers contain at least one type of fibers selected from the group consisting of carbon fibers and glass fibers.
<7> The laminate according to any one of <1> to <6>, wherein at least one layer of the fiber-reinforced resin layer and the flame retardant layer contains an electromagnetic wave-shielding filler.
<8> The laminate according to any one of <1> to <7>, wherein the fiber-reinforced resin layer has a thickness of 0.5 to 30 mm.
<9> A battery case for a non-aqueous electrolyte secondary battery, using the laminate according to any one of <1> to <8>.
<10> The battery case for a non-aqueous electrolyte secondary battery according to <9>, wherein the flame retardant layer in the laminate is arranged inside the battery case.
<11> The battery case for a non-aqueous electrolyte secondary battery according to <9>, wherein the flame retardant layer in the laminate is arranged inside and outside the battery case.
<12> The battery case for a non-aqueous electrolyte secondary battery according to any one of <9> to <11>, further containing an electromagnetic wave-shielding layer.
<13> A non-aqueous electrolyte secondary battery including the battery case for a non-aqueous electrolyte secondary battery according to any one of <9> to <12>.

### Advantageous Effects of Invention

According to one embodiment according to the present invention, there is provided a laminate with excellent flame retardancy while containing reinforcing fibers, as well as a battery case for a non-aqueous electrolyte secondary battery and a non-aqueous electrolyte secondary battery including the same.

### Description of Embodiments

Hereinafter, the contents of the present invention will be described in detail. Although the description of the contents of the constituent requirements described below may be based on representative embodiments of the present invention, the present invention is not limited to such embodiments.

In the present specification, "polymer" is a concept that includes both homopolymer and copolymer.

In the present specification, "to" indicating a numerical value range is used with the meaning that the numerical values described before and after it are included as the lower limit value and the upper limit value.

In the present specification, units described either before or after "to" indicating a numerical range mean that the same units are indicated unless otherwise noted.

In the present specification, a combination of two or more preferred aspects is a more preferred aspect.

In the present specification, the amount of each component in each layer in each layer means, in the case where a plurality of substances corresponding to each component are present in each layer, the total amount of such plurality of substances present in each layer, unless otherwise noted.

Hereinafter, the present invention will be described in detail.

### (Laminate)

A laminate according to the present invention includes a flame retardant layer and a fiber-reinforced resin layer. The flame retardant layer contains 20% by mass to 80% by mass of a thermoplastic resin based on the total mass of the flame retardant layer, and 20% by mass to 80% by mass of at least one flame retardant selected from the group consisting of a phosphorus-based flame retardant, a bromine-based flame retardant, and an inorganic hydrate-based flame retardant based on the total mass of the flame retardant layer, and has a content of reinforcing fibers of 0% by mass to 20% by mass based on the total mass of the flame retardant layer, and the fiber-reinforced resin layer contains 30% by mass to 90% by mass of a thermoplastic resin based on the total mass of the fiber-reinforced resin layer, and 10% by mass to 70% by mass of reinforcing fibers based on the total mass of the fiber-reinforced resin layer.

The laminate according to the present invention, by having the above configuration, has excellent flame retardancy while containing reinforcing fibers, and also has excellent impact resistance strength. The reason for this is not clear, but may be inferred as follows.

In the case where a flame retardant is added to a resin containing reinforcing fibers (that is, fiber-reinforced resin), it is difficult to obtain a sufficient effect of flame retardancy due to heat transfer through the reinforcing fibers when the thermoplastic resin melts (candle effect), compared to a resin that does not contain reinforcing fibers. Also, in the case where a flame retardant is added in a large amount to the fiber-reinforced resin to improve flame retardancy, there is concern that the mechanical properties (impact resistance strength) of the resulting molded body may deteriorate.

In the laminate according to the present invention, it is presumed that by adjusting the content of the above reinforcing fibers in the flame retardant layer to 0 to 20% by mass, the flame retardant effect can be further improved, and by including the fiber-reinforced resin layer containing the thermoplastic resin and reinforcing fibers, high mechanical properties are ensured, so that the laminate is excellent in flame retardancy while containing the reinforcing fibers. It is also presumed that the laminate according to the present invention is excellent in both flame retardancy and mechanical properties since it includes the flame retardant layer and fiber-reinforced resin layer having the above configurations.

Hereinafter, the details of each configuration of the laminate will be described.

### <Flame retardant layer>

The laminate according to the present invention includes a flame retardant layer. The flame retardant layer is a layer containing a thermoplastic resin and a flame retardant. The flame retardant layer contains at least one flame retardant selected from the group consisting of a phosphorus-based flame retardant, a bromine-based flame retardant, and an inorganic hydrate-based flame retardant. As the flame retardant, from the viewpoint of further improving the flame retardancy of the laminate, a phosphorus-based flame retardant and a bromine-based flame retardant are preferred, and a phosphorus-based flame retardant is more preferred.

### <<Phosphorus-based flame retardant>>

There are no particular restrictions on the phosphorus-based flame retardant as long as it is a flame retardant that contains a phosphorus atom in the structural formula. Note that, in the case where the phosphorus-based flame retardant is a salt, it is sufficient that at least one of the structural formulas of the anionic component and the cationic component contains a phosphorus atom.

Examples of the phosphorus-based flame retardant include a phosphoric acid ester compound, a phosphazene compound, a polyphosphoric acid salt compound, a phosphoric acid salt compound, a phosphinic acid salt, a phosphonic acid compound, a phosphine oxide compound, a phosphite compound, a phosphonite compound, a phosphinite compound, a phosphine compound, a phosphaphenanthrene compound, and red phosphorus. Among these, a polyphosphoric acid salt compound, a phosphinic acid salt, and red phosphorus are preferred, and a polyphosphoric acid salt compound is particularly preferred.

Examples of the polyphosphoric acid salt compound include ammonium polyphosphate, melamine polyphosphate, melamine-melam-melem polyphosphate, and ammonium polyphosphate.

These phosphorus-based flame retardants may be used singly or in combinations of two or more thereof.

The decomposition temperature of the phosphorus-based flame retardant is preferably in the range of 100°C to 500°C, more preferably in the range of 200°C to 470°C or lower, and still more preferably in the range of 250°C to 450°C.

In the method for measuring the above decomposition temperature, the sample mass is measured in a thermogravimetric analyzer (TGA) while raising the temperature at a constant rate (for example, plus 10°C per minute) up to 700°C, and the mass at which the sample mass has decreased by 5% by weight from the start of measurement (Td5) is read. This 5% by weight decrease temperature (Td5) is determined as the decomposition temperature.

The reason why flame retardancy is improved when the flame retardant layer contains a phosphorus-based flame retardant as the flame retardant is not certain, but the present inventors speculate that it is because the char layer formed by thermal decomposition of the phosphorus-based flame retardant blocks heat to the fiber-reinforced layer and hinders the candle effect of the reinforcing fibers.

### <<Bromine-based flame retardant>>

As the bromine-based flame retardant, a bromine-containing organic compound is preferred, and examples thereof include ethylene bis(pentabromobiphenyl), hexabromobenzene, tetrabromobisphenol S, hexabromocyclododecane (HBCD), tetrabromobisphenol A (TBBA), TBBA epoxy oligomer or polymer, TBBA-bis(2,3-dibromopropyl ether), dibromoethyl-dibromocyclohexane, dibromoneopentyl glycol, tribromophenol, tribromophenol allyl ether, pentabromophenol, pentabromotoluene, hexabromodiphenyl ether, dibromoneopentyl glycol tetracarbonate, and N-methylhexabromophenylamine.

Among these, ethylene bis(pentabromobiphenyl) is preferred.

These bromine-based flame retardants may be used singly or in combinations of two or more thereof.

### <<Inorganic hydrate-based flame retardant>>

Examples of the inorganic hydrate-based flame retardant include magnesium hydroxide, aluminum hydroxide, alumina (hydrate), zinc borate, hydrotalcite, dawsonite, calcium aluminate, and kaolin clay. Among these, as the inorganic hydrate-based flame retardant, magnesium hydroxide and aluminum hydroxide are preferred since they can achieve both flame retardancy and cost.

These inorganic hydrate-based flame retardants may be used singly or in combinations of two or more thereof.

The flame retardant layer may contain flame retardants other than the above-described phosphorus-based flame retardant, bromine-based flame retardant, and inorganic hydrate-based flame retardant (hereinafter, also referred to as "other flame retardants") from the viewpoint of improving flame retardancy.

Examples of the other flame retardants include metal oxides such as zinc oxide, calcium oxide, barium oxide, aluminum oxide, tin oxide, and magnesium oxide; antimony compounds such as antimony trioxide, antimony tetroxide, antimony pentoxide, and sodium antimonate; zinc compounds such as zinc stannate and zinc phosphate; silicone-based flame retardants; and sulfur-based flame retardants.

The flame retardant layer contains 20% by mass to 80% by mass, preferably 40% by mass to 80% by mass, of at least one flame retardant selected from the group consisting of a phosphorus-based flame retardant, a bromine-based flame retardant, and an inorganic hydrate-based flame retardant, based on the total mass of the flame retardant layer.

Also, the flame retardant layer has a content of reinforcing fibers, which will be described later, of 0% by mass to 20% by mass, preferably 0% by mass or more and less than 10% by mass, more preferably 0% by mass to 5% by mass, still more preferably 0% by mass to 3% by mass, and particularly preferably 0% by mass (that is, not containing reinforcing fibers), based on the total mass of the flame retardant layer. When the content of reinforcing fibers in the flame retardant layer is in the above range, the flame retardancy of the laminate tends to be improved.

On the other hand, in the case where the flame retardant layer does not contain reinforcing fibers, the difference in mold shrinkage factor between the flame retardant layer and the fiber-reinforced resin layer becomes larger, which may easily cause warpage of the molded body when the laminate is molded, for example, by doublemolding. Such a case can be handled by adjusting the molding conditions, for example, but it is preferable to have the flame retardant layer contain a certain amount of reinforcing fibers as well, and then to have the fiber-reinforced resin layer contain a larger amount of reinforcing fibers. In that case, the content of reinforcing fibers in the flame retardant layer is preferably 5% by mass to 20% by mass based on the total mass of the flame retardant layer.

### <<Thermoplastic resin>>

The flame retardant layer contains 20% by mass to 80% by mass, preferably 20% by mass to 60% by mass, of a thermoplastic resin based on the total mass of the flame retardant layer.

The thermoplastic resin contained in the flame retardant layer is the same as the thermoplastic resin contained in the fiber-reinforced resin layer described later, and preferred aspects are also the same.

The flame retardant layer may further contain resins other than the above-described thermoplastic resin. Examples of the resins other than the thermoplastic resin include thermosetting resins, such as epoxy resins, thermosetting unsaturated polyester resins, and phenolic resins.

The content of the resins other than the above-described thermoplastic resin in the flame retardant layer is preferably 0 to 10% by mass, more preferably 0 to 5% by mass, and still more preferably 0 to 3% by mass, based on the total mass of the flame retardant layer.

The flame retardant layer preferably has a thickness of 0.1 to 30 mm, more preferably 0.3 to 20 mm, and still more preferably 0.5 to 10 mm. The thickness of the flame retardant layer can be appropriately adjusted depending on the application and the flame retardancy required for it.

In the present invention, the flame retardant layer contains 20% by mass to 80% by mass of the thermoplastic resin. In this way, the content of the above-mentioned flame retardant can be increased compared to the case where a thermosetting resin is contained in a similar content to that of the thermoplastic resin, and the flame retardancy of the resulting laminate is considered to be further improved. Note that, in the case where the flame retardant layer contains a thermosetting resin, as the content of the flame retardant in the flame retardant layer is increased, the thermosetting resin is prone to decrease in toughness due to crosslinking and mechanical properties are more likely to deteriorate.

### <Fiber-reinforced resin layer>

The laminate according to the present invention includes a fiber-reinforced resin layer. The fiber-reinforced resin layer is a layer containing a thermoplastic resin and reinforcing fibers.

### <<Thermoplastic resin>>

Examples of the thermoplastic resin include a polycarbonate, a styrene-based resin, a polyamide resin, a polyester resin, a polyphenylene sulfide (PPS resin), a modified polyphenylene ether (modified PPE resin), a polyacetal (POM resin), a liquid crystal polyester, a polyarylate, an acrylic resin such as a polymethyl methacrylate resin (PMMA), vinyl chloride, a polyimide (PI), a polyamideimide (PAI), a polyetherimide (PEI), a polysulfone, a polyethersulfone, a polyketone, a polyetherketone, a polyetheretherketone (PEEK), a polyolefin resin such as a polyethylene and a polypropylene, a modified polyolefin resin, a phenolic resin, and a phenoxy resin.

Among these, from the viewpoint of light weight and excellent flame retardancy, the thermoplastic resin contained in the flame retardant layer is preferably at least one resin selected from the group consisting of an acrylic resin, a polyolefin resin, a polyamide resin, and a polyester resin, still more preferably at least one resin selected from the group consisting of a polyamide resin, a polyethylene, and a polypropylene resin, and particularly preferably a polyamide resin and/or a polypropylene resin. These thermoplastic resins may be derived from fossil fuels or may be derived from biomass feedstocks.

From the viewpoint of excellent flame retardancy and impact resistance strength, the thermoplastic resin contained in the fiber-reinforced resin layer is preferably at least one resin selected from the group consisting of an acrylic resin, a polyolefin resin, a polyamide resin, and a polyester resin, still more preferably at least one resin selected from the group consisting of a polyamide resin, a polyethylene, and a polypropylene resin, and particularly preferably a polyamide resin and/or a polypropylene resin.

### - Polypropylene resin -

The above-described polypropylene resin may be an unmodified polypropylene resin or may be a polypropylene resin containing a carboxylic acid structure or a carboxylic acid salt structure by means of modification or other methods. In the case where both an unmodified resin and a polypropylene resin containing a carboxylic acid or carboxylic acid salt structure are used, the preferred mass ratio therebetween is 99/1 to 80/20, more preferably 98/2 to 85/15, and still more preferably 97/3 to 90/10, in terms of the unmodified material/modified material ratio.

The polypropylene resin is, for example, a homopolypropylene, a random polypropylene, a block polypropylene, or a propylene-based polymer, referred to as a modified polypropylene.

The polypropylene resin is a polymer containing structural units derived from propylene. The polypropylene resin is preferably a copolymer containing structural units derived from propylene and structural units derived from at least one olefin other than propylene selected from the group consisting of an α-olefin, a conjugated diene, and a non-conjugated diene.

Examples of the α-olefin include an α-olefin having 2 to 20 carbon atoms excluding propylene, such as ethylene, 1-butene, 3-methyl-1-butene, 4-methyl-1-pentene, 3-methyl-1-pentene, 4-methyl-1-hexene, 4,4-dimethyl-1-hexene, 1-nonene, 1-octene, 1-heptene, 1-hexene, 1-decene, 1-undecene, 1-dodecene, 1-tetradecene, 1-hexadecene, 1-octadecene, and 1-eicosene. Among them, 1-butene, ethylene, 4-methyl-1-pentene, and 1-hexene are preferred, and 1-butene and 4-methyl-1-pentene are more preferred.

Examples of the conjugated diene and the non-conjugated diene include butadiene, ethylidene norbornene, dicyclopentadiene, and 1,5-hexadiene.

The α-olefin, conjugated diene, and non-conjugated diene may be used in combination of two or more. In particular, the propylene resin is preferably a copolymer of propylene and an α-olefin. Examples of such a copolymer include an ethylene-propylene copolymer, a propylene-1-butene copolymer, and an ethylene-propylene-1-butene copolymer.

The propylene, α-olefin, conjugated diene, and non-conjugated diene contained in the polypropylene resin may be derived from fossil fuels or may be derived from biomass feedstocks.

The proportion of structural units derived from propylene in the polypropylene resin is preferably 50 to 100 mol%, more preferably 60 to 100 mol%, and particularly preferably 70 to 100 mol%, with respect to the total constituent units of the polypropylene resin, from the viewpoint of enhancing the mechanical properties of the resulting laminate.

The polypropylene resin may have a structure containing, for example, group 15 to 17 elements of the periodic table. Examples of the structure containing group 15 to 17 elements of the periodic table include a functional group such as a carboxylic anhydride group, a carboxylic acid group, an amino group, an acid amide group, and a halogen group.

Such a structure can be introduced by a known method such as radical grafting reaction. Examples of the group 17 elements include halogen atoms such as a chlorine atom. Examples of the group 16 elements include an oxygen atom and a sulfur atom, and an oxygen atom is preferred. Examples of the group 15 elements include a nitrogen atom. In particular, an oxygen atom is preferred. That is, the structure containing group 15 to 17 elements of the periodic table may be preferably a carboxylic acid (salt). The carboxylic acid (salt) is preferably a carboxylic acid group or a carboxylic anhydride group, and more preferably a group having a maleic anhydride structure.

In the case where the polypropylene resin has a structure containing group 15 to 17 elements of the periodic table, the content of such elements is preferably 0.0003 to 5% by mass, more preferably 0.0005 to 4.5% by mass, still more preferably 0.0008 to 4.3% by mass, and particularly preferably 0.001 to 4% by mass, based on the total mass of the polypropylene resin.

The above content can be calculated from, for example, the charging ratio of each component in the grafting reaction. It can also be identified by an elemental analyzer such as an elemental analyzer (for example, vario EL III model: manufactured by Elementar Analysensysteme GmbH).

The polypropylene resin preferably contains an unmodified polypropylene resin and an acid-modified polypropylene resin.

The melt flow rate (MFR) of the polypropylene resin, as measured under the conditions at 230°C with a load of 2.16 kg, is usually 3 to 100 g/10 min, and preferably 15 to 100 g/10 min.

The MFR can be determined by the measurement method described in the Examples described later.

The fiber-reinforced resin layer contains 30% by mass to 90% by mass, preferably 30% by mass to 80% by mass, and more preferably 35% by mass to 60% by mass, of the above-described thermoplastic resin based on the total mass of the fiber-reinforced resin layer.

The fiber-reinforced resin layer may further contain resins other than the above-described thermoplastic resin. Examples of the resins other than the thermoplastic resin include thermosetting resins, such as epoxy resins, thermosetting unsaturated polyester resins, and phenolic resins.

The content of the resins other than the above-described thermoplastic resin in the fiber-reinforced resin layer is preferably 0 to 10% by mass, more preferably 0 to 5% by mass, and still more preferably 0 to 3% by mass, based on the total mass of the fiber-reinforced resin layer.

In particular, in the case where the resins other than the above-described thermoplastic resin are thermosetting resins, from the viewpoint of suppressing the deterioration of mechanical properties due to the decrease in toughness caused by crosslinking, it is more preferable that the fiber-reinforced resin layer is substantially free from them. Note that "substantially free from" means that unavoidably contaminating components are permissible.

### <<Reinforcing fibers>>

Examples of the reinforcing fibers include carbon fibers, glass fibers, aramid fibers, alumina fibers, silicon carbide fibers, and boron fibers. From the viewpoint of improving the impact resistance strength of the laminate, the reinforcing fibers preferably contain at least one type of fibers selected from the group consisting of carbon fibers and glass fibers.

### <<Carbon fibers>>

As the carbon fibers, various types of known carbon fibers can be used. Examples of the carbon fibers include carbon fibers such as polyacrylonitrile-based, rayon-based, pitch-based, polyvinyl alcohol-based, regenerated cellulose-based, and pitch-based produced from mesophase pitch. The carbon fibers may be general-purpose fibers or may be high-strength fibers. Also, the carbon fibers may be long fibers, short fibers, and recycled fibers.

### <<Glass fibers>>

There are no particular restrictions on the glass fibers, and examples thereof include fibers made of a glass composition such as A glass, C glass, D glass, E glass, and S glass. Among these, in particular, fibers made of a glass composition of E glass (alkali-free glass) are preferred.

The reinforcing fibers may be short fibers or may be long fibers. The short fibers may be chopped fiber (cut fiber)-shaped short fibers or may be pulp-shaped short fibers having fibrils. Also, the reinforcing fibers may be single fibers or may be those in which a plurality of single fibers are twisted together.

The average fiber length of the reinforcing fibers is preferably 0.01 mm or more, more preferably 0.1 mm or more, and still more preferably 1 mm or more, and is preferably 100 mm or less, more preferably 50 mm or less, and still more preferably 30 mm or less. When the average fiber length is in the above range, the reinforcing effect on mechanical properties by the reinforcing fibers tends to be fully expressed, and the appearance also tends to be good since the dispersibility of the reinforcing fibers in the fiber-reinforced resin layer is improved.

The proportion of the number of fibers with a fiber length of less than 0.1 mm with respect to the total number of fibers of the reinforcing fibers is preferably 18% or less.

The average fiber diameter of the reinforcing fibers is preferably 1 µm or more, more preferably 5 µm or more, and is preferably 30 µm or less, more preferably 20 µm or less. When in such an aspect, the reinforcing fibers are less likely to be damaged at the time of molding, the impact resistance strength of the resulting molded body tends to be higher, the appearance of the molded body is better, and a sufficient reinforcing effect on the mechanical properties such as rigidity and heat resistance of the molded body can be obtained.

The average fiber length and average fiber diameter can be determined by, for example, taking photographs of the reinforcing fibers with an optical microscope, measuring the length or diameter of 100 randomly selected reinforcing fibers in the obtained photographs, and arithmetically averaging each of them.

Among the above, suitable examples of the form of glass fibers include "glass roving" in which single fibers or a plurality of twisted fibers are continuously wound, "chopped strands" in which the average fiber length is cut to 1 to 10 mm, and "milled fibers" in which the average fiber length is milled to about 10 to 500 µm.

The reinforcing fibers may be fibers for which no surface treatment has been performed (hereinafter, "fibers (C0)"), or may be fibers for which a surface treatment has been performed (hereinafter, "surface-treated fibers (C1)").

For example, the "surface-treated fibers (C1)" may be fibers that have been surface-treated using various sizing agents (hereinafter "sizing agent-treated fibers (C1A)"). In many cases, the above "sizing agent-treated fibers (C1A)" often contain the above fibers (C0) and a sizing agent that coats such fibers (C0).

Examples of the sizing agent include an acrylic sizing agent, a urethane-based sizing agent, and an acid copolymer-based sizing agent. Among these, as the sizing agent, an acid copolymer-based sizing agent is preferred.

Here, in the case where the above "sizing agent-treated fibers (C1A)" are of glass fiber roving that has been surface-treated using a sizing agent (hereinafter, "sizing agent-treated glass fiber roving"), the sizing agent contained in the "sizing agent-treated glass fiber roving" is preferably an acid copolymer-based sizing agent from the point that impregnation of the resin component into the sizing agent-treated fibers is sufficiently performed. An acrylic sizing agent is also one of the suitable sizing agents.

On the other hand, in the case where the "sizing agent-treated fibers (C1A)" are fibers other than the "sizing agent-treated glass fiber roving", such as chopped strands that have been surface-treated using a sizing agent (hereinafter, "sizing agent-treated chopped strands"), the sizing agent contained in the "sizing agent-treated chopped strands" is not limited to an acid copolymer-based sizing agent, and may be a sizing agent other than the acid copolymer-based sizing agent, such as an acrylic sizing agent or a urethane-based sizing agent.

Even in "sizing agent-treated chopped strands" that contain such a sizing agent other than the acid copolymer-based sizing agent, impregnation of the resin component is sufficiently performed, as in the case of "sizing agent-treated chopped strands" that contain the acid copolymer-based sizing agent, which is thus preferred.

The reinforcing fibers may contain, if necessary, one or more components selected from the following: a silane-based coupling agent, a titanate-based coupling agent, an aluminum-based coupling agent, a zirconium-based coupling agent, a borane-based coupling agent, a curing catalyst, a lubricant, a filling agent, a thixotropy-imparting agent, a tackifying agent, a wax, a thermal stabilizer, a light-resistant stabilizer, a fluorescent brightening agent, a foaming agent, a pH adjuster, a leveling agent, an anti-gelation agent, a dispersion stabilizer, an anti-oxidant, a radical scavenger, a heat resistance-imparting agent, an inorganic filling agent, an organic filling agent, a plasticizer, a reinforcing agent, an anti-bacterial agent, an anti-fungal agent, a rust-preventing agent, a thermoplastic resin, a thermosetting resin, a pigment, a dye, a conductivity-imparting agent, an anti-static agent, a moisture permeability-improving agent, a water repellent, an oil repellent, a hollow foam, a crystalline water-containing compound, a flame retardant, a water absorbent, a moisture absorbent, a deodorant, a foam stabilizer, a defoaming agent, an anti-mold agent, an antiseptic agent, an anti-algal agent, a pigment dispersing agent, an anti-blocking agent, and an anti-hydrolysis agent.

Examples of the method for surface-treating the reinforcing fibers using a sizing agent include a method in which a sizing agent is applied to the surface of the reinforcing fibers with an applicator or other means, a method in which the reinforcing fibers are immersed in the sizing agent, a method in which the sizing agent is sprayed onto the reinforcing fibers in mist form, and a method in which the reinforcing fibers are brought into contact with a roller to which the sizing agent has adhered. In addition, the above surface treatment methods may be either batch or continuous.

In the case where the reinforcing fibers are surface-treated using a sizing agent, the mass proportion of the sizing agent in the reinforcing fibers, that is, loss on ignition, is preferably 0.1 to 1.5% by mass based on the total mass of the reinforcing fibers. The mass proportion of the sizing agent (loss on ignition) is measured for fibers obtained by applying the sizing agent to the reinforcing fibers with an applicator or other means, and completely volatilizing the volatile substances by drying, for example. In the case where the loss on ignition of the sizing agent applied to the surface of the carbon fibers or glass fibers is 0.1% by mass or more, the interface between the resin and reinforcing fibers mentioned above can be stabilized and heat resistance can be expressed, which is thus preferred. On the other hand, in the case where the loss on ignition of the sizing agent applied to the surface of the reinforcing fibers is 1.5% by mass or less, improvement in physical properties such as heat resistance can be observed, which is thus preferred.

The loss on ignition of the sizing agent in the reinforcing fibers is the value measured in accordance with JIS R 3420 (2006) 7.3.2.

The reinforcing fibers after the surface treatment may be bundled into a predetermined number of fibers, wound, then cut and/or milled if necessary, and processed into chopped strands, milled fibers, yarn, roving, or others.

The fiber-reinforced resin layer may further contain fibers other than the reinforcing fibers (hereinafter, also referred to as "other fibers") as long as the effects of the present invention are achieved.

Examples of the other fibers include natural fibers such as cotton fibers, silk fibers, wood fibers, and cellulose fibers; synthetic fibers made of synthetic resins such as a fully aromatic polyamide (aramid), a fully aromatic polyester, a fully aromatic polyesteramide, a fully aromatic polyether, a fully aromatic polycarbonate, a fully aromatic polyazomethine, a polyphenylene sulfide, a poly-p-phenylene benzobisoxazole, a poly(p-phenylene benzobisothiazole), a polybenzoimidazole, a polyetheretherketone, a polyamideimide, a polyimide, a polytetrafluoroethylene, a polyvinyl alcohol, a polyolefin, a polyarylate, and a fluorinated polymer.

The fiber-reinforced resin layer may contain, in addition to the reinforcing fibers and thermoplastic resin, optional additives if necessary.

Examples of the optional additives include a nucleating agent, an anti-blocking agent, a pigment, a filling agent, a filler, a dye, a lubricant, a plasticizer, a mold release agent, an anti-oxidant, an ultraviolet absorber, an anti-bacterial agent, a surfactant, an anti-static agent, a weatherproof stabilizer, a heat resistance stabilizer, an anti-slip agent, a crystallization aid, an anti-fogging agent, an anti-aging agent, a hydrochloric acid absorber, an impact modifier, a crosslinking agent, a co-crosslinking agent, a crosslinking aid, a pressure sensitive adhesive, a softener, and a processing aid.

These additives may be used singly or in combinations of two or more thereof.

The content of the above-described reinforcing fibers contained in the fiber-reinforced resin layer is preferably larger than the content of the above-described reinforcing fibers contained in the above-described flame retardant layer by 10% by mass or more, more preferably by 20% by mass or more.

The fiber-reinforced resin layer contains 10% by mass to 70% by mass of the reinforcing fibers based on the total mass of the above-described fiber-reinforced resin layer, preferably 20% by mass to 60% by mass based on the total mass of the above-described fiber-reinforced resin layer, and more preferably 40% by mass to 60% by mass based on the total mass of the above-described fiber-reinforced resin layer.

Also, from the viewpoint of sufficiently enhancing the impact resistance strength of the laminate, the content of the flame retardant in the fiber-reinforced resin layer is preferably 0% by mass or more and less than 20% by mass, more preferably 0% by mass to 10% by mass, still more preferably 0% by mass to 5% by mass, and particularly preferably 0% by mass to 3% by mass, based on the total mass of the fiber-reinforced resin layer.

The density of the fiber-reinforced resin layer is preferably 0.9 to 1.8 g/cm³, more preferably 1.0 to 1.7 g/cm³.

The density of the fiber-reinforced resin layer can be determined by the measurement method described in the Examples described later.

The fiber-reinforced resin layer preferably has a thickness of 0.5 to 30 mm, more preferably 1.0 to 20 mm, still more preferably 2.0 to 10 mm, and particularly preferably 3.0 to 10 mm. When the thickness of the fiber-reinforced resin layer is at or above the lower limit value described above, warpage of the laminate tends to be suppressed and impact resistance strength tends to be further improved. Also, when the thickness of the fiber-reinforced resin layer is at or below the upper limit value described above, moldability tends to be excellent. The thickness of the fiber-reinforced resin layer can be appropriately adjusted depending on the application and the mechanical strength required for it.

### <<Method for forming fiber-reinforced resin layer>>

The method for forming the fiber-reinforced resin layer is not particularly limited, and a conventionally known method can be employed. For example, the resin and the above-described carbon fibers or glass fibers can be mixed, molded into a fiber-reinforced film, fiber-reinforced sheet, fiber-reinforced plate, or other products by employing extrusion molding, injection molding, vacuum molding, pressure molding, press molding, or other methods, and made into a fiber-reinforced resin layer. Also, masterbatch-like pellets composed of the above-described reinforcing fibers and thermoplastic resin can be mixed with thermoplastic resin pellets to form a fiber-reinforced resin layer by injection molding or other methods. Alternatively, a mixed mat composed of the above-described reinforcing fibers and thermoplastic resin fibers can be used and press-molded at or above the flow start temperature of the thermoplastic resin fibers to form a fiber-reinforced resin layer, for example.

### <<Electromagnetic wave-shielding filler>>

From the viewpoint of preventing leakage of electromagnetic wave noise generated from lithium ion batteries or other sources to the outside, the fiber-reinforced resin layer or flame retardant layer may contain an electromagnetic wave-shielding filler. From the viewpoint of achieving both mechanical properties and electromagnetic wave-shielding properties of the laminate, the electromagnetic wave-shielding filler is preferably contained in the flame retardant layer. Note that, in the present specification, in the case where the flame retardant layer contains an electromagnetic wave-shielding filler, the flame retardant layer may be referred to as "flame retardant and electromagnetic wave-shielding layer".

The content of the electromagnetic wave-shielding filler in the fiber-reinforced resin layer and flame retardant layer is preferably 0.1% by mass to 20% by mass, more preferably 0.5% by mass to 15% by mass, and still more preferably 1% by mass to 10% by mass, based on the total mass of the fiber-reinforced resin layer and flame retardant layer (total mass of the fiber-reinforced resin layer and flame retardant layer), from the viewpoint of making flame retardancy, electromagnetic wave-shielding properties, and mechanical properties better. Similarly, the content of the electromagnetic wave-shielding filler is preferably 0.1% by mass to 20% by mass, more preferably 0.5% by mass to 15% by mass, and still more preferably 1% by mass to 10% by mass, based on the total mass of the flame retardant layer.

There are no particular restrictions on the electromagnetic wave-shielding filler as long as it can shield electromagnetic waves, and it may reflect electromagnetic waves or may absorb electromagnetic waves. As the electromagnetic wave-shielding filler, a known and commonly used electromagnetic wave-shielding filler can be used. Examples of the electromagnetic wave-shielding filler include a carbon-based electromagnetic wave-shielding filler and a metal-based electromagnetic wave-shielding filler.

Examples of the carbon-based electromagnetic wave-shielding filler include carbon nanotubes, carbon black, graphite, graphene, and graphite.

Examples of the metal-based electromagnetic wave-shielding filler include a metal such as gold, silver, platinum, aluminum, copper, iron, nickel, palladium, chromium, and stainless steel, as well as metal powder, metal flakes, and metal fibers made of oxides of these metals.

As the metal-based electromagnetic wave-shielding filler, a filler in which a soft magnetic powder piece is coated with a conductive metal can also be preferably used.

The soft magnetic powder piece is preferably a silicon steel, sendust alloy, permalloy alloy, Co- or Fe-based amorphous alloy powder piece, or ferrite-based oxide powder piece.

The conductive metal has the same meaning as the conductive metal in the electromagnetic wave-shielding filler contained in the electromagnetic wave-shielding layer described later, and preferred aspects are also the same.

Although a known method can be used as the method for coating with the conductive metal, the electroless plating method is particularly preferred. According to this method, a certain amount of uniform coating can be obtained on the powder piece surface. The electroless plating may be performed in accordance with a conventional method. For example, it is performed by washing a soft magnetic powder piece to activate the surface, adding it to an aqueous solution containing a complexing agent and a reducing agent, and adding a conductive metal salt dropwise thereto. Examples of the complexing agent include ammonia water and salts of ethylenediaminetetraacetic acid, nitrilotriacetic acid, triethylenetetetraminehexaacetic acid, and others. As the reducing agent, formalin, hydrazine and derivatives thereof, tartaric acid, glucose, and others can be used. These may be selected as appropriate depending on the conductive metal to be used. As the conductive metal salt, for example, a nitric acid salt, a sulfuric acid salt, and others can be used.

The preferred amount of conductive metal coating varies depending on the type of soft magnetic powder piece, the size and shape of powder piece, the type of conductive metal, and other factors. For example, since a ferrite-based oxide has a lower specific gravity than an alloy-based powder piece, even in powder pieces with the same shape that have a coating of approximately the same thickness, the metal mass ratio (%) in the coated powder piece is higher in the case where a ferrite-based powder piece is used compared to the case where an alloy-based powder piece is used. For example, when an iron-based soft magnetic alloy powder piece with an average particle size of 5 to 200 µm and an aspect ratio of 10 to 50 is used and coated with silver, copper, or nickel, it is appropriate for the amount of coating to be about 5 to 75% by mass, preferably 10 to 50% by mass, and still more preferably 10 to 20% by mass, per unit mass of coated powder piece.

### <<Electromagnetic wave-shielding layer>>

The laminate may further include an electromagnetic wave-shielding layer. In the case where the laminate includes an electromagnetic wave-shielding layer, it is preferably provided between the above-described flame retardant layer and fiber-reinforced resin layer.

There are no particular restrictions on the electromagnetic wave-shielding layer as long as it is a layer that shields electromagnetic waves, and a known and commonly used electromagnetic wave-shielding layer can be used. The electromagnetic wave-shielding layer is preferably a layer containing a binder resin and the above-described electromagnetic wave-shielding filler, for example. There are no particular restrictions on the binder resin contained in the electromagnetic wave-shielding layer, and examples thereof include a thermoplastic resin and a thermosetting resin. The thermoplastic resin and thermosetting resin have the same meaning as the thermoplastic resin and thermosetting resin in the above-described fiber-reinforced resin layer, and preferred aspects are also the same.

**Examples** of the conductive metal constituting the electromagnetic wave-shielding filler include a metal such as gold, silver, platinum, aluminum, copper, iron, nickel, palladium, chromium, and stainless steel, as well as metal powder, metal flakes, and metal fibers made of oxides of these metals. Among these, the conductive metal is preferably composed of at least one metal selected from silver, nickel, copper, and stainless steel, and is more preferably composed of at least one metal selected from copper and stainless steel.

The shape of the electromagnetic wave-shielding filler is preferably in the form of fibers.

The diameter of the electromagnetic wave-shielding filler is preferably 1 µm to 20 µm, and 4 µm to 8 µm is preferred.

The length of the electromagnetic wave-shielding filler is preferably 0.5 mm to 5.0 mm, and more preferably 1 mm to 2 mm.

The content of the electromagnetic wave-shielding filler is preferably 0.1% by mass or more and less than 5.0% by mass, more preferably 0.1% by mass to 3% by mass, and still more preferably 0.3% by mass to 1% by mass, with respect to the total solid content of the electromagnetic wave-shielding layer.

The electromagnetic wave-shielding layer preferably has a thickness of 0.5 to 30 mm, more preferably 0.5 to 20 mm, and still more preferably 0.5 to 10 mm.

The laminate according to the present invention may have a plurality of each of the layers mentioned above. Examples of the layer configuration of the laminate according to the present invention include "flame retardant layer / fiber-reinforced resin layer", "flame retardant layer / fiber-reinforced resin layer / flame retardant layer", "flame retardant layer / electromagnetic wave-shielding layer / fiber-reinforced resin layer", "flame retardant layer / fiber-reinforced resin layer / electromagnetic wave-shielding layer", "electromagnetic wave-shielding layer / flame retardant layer / fiber-reinforced resin layer", "flame retardant layer / fiber-reinforced resin layer / flame retardant layer / electromagnetic wave-shielding layer", "flame retardant layer / electromagnetic wave-shielding layer / fiber-reinforced resin layer / flame retardant layer", and "electromagnetic wave-shielding layer / flame retardant layer / fiber-reinforced resin layer / flame retardant layer".

The laminate according to the present invention may contain layers other than the above-mentioned flame retardant layer, fiber-reinforced resin layer, and electromagnetic wave-shielding layer (hereinafter, also referred to as "other layers"). Examples of the other layers include a protective layer and an insulating layer.

Since the laminate according to the present invention has excellent flame retardancy and impact resistance strength, it can be applied to components for which flame retardancy and impact resistance strength are required.

The laminate according to the present invention can be applied to components or housings in various applications for which impact resistance strength and flame retardancy are required, such as automobiles, ships, railway vehicles, aircrafts, domestic electrification equipment, OA equipment, AV equipment, office equipment, construction and housing facilities, machine tools, and industrial machinery. Furthermore, it can be applied to millimeter wave radar housings and battery cases for a non-aqueous electrolyte secondary battery, as described later.

### <Battery case for non-aqueous electrolyte secondary battery>

A battery case for a non-aqueous electrolyte secondary battery according to the present invention (hereinafter, also simply referred to as "battery case") is a battery case for a non-aqueous electrolyte secondary battery using the above-described laminate. Since the battery case uses the above-described laminate, it has excellent flame retardancy and impact resistance strength. Also, in the case of using the above-described laminate containing a flame retardant and electromagnetic wave-shielding layer, the battery case has excellent electromagnetic wave-shielding properties in addition to flame retardancy and impact resistance strength.

There are no particular limitations on the battery case according to the present invention as long as it accommodates a non-aqueous electrolyte secondary battery, and examples thereof include one molded as a case for accommodating a lithium ion battery. In the case where the battery case according to the present invention is applied to a battery pack for an electric vehicle, the mileage of the electric vehicle can be extended since it has a lighter weight compared to cases made of metal or other materials.

In the battery case, it is preferred that the flame retardant layer is arranged inside the battery case, and it is more preferred that the flame retardant layer is arranged on the inner surface of the battery case.

Battery cases usually include a non-aqueous electrolyte, a group of electrodes, and other components inside the case. The term "inside the battery case" means the side of the battery case that accommodates a non-aqueous electrolyte, a group of electrodes, and other components. Also, the term "inner surface of the battery case" means the surface inside the battery case.

Such a configuration can be implemented in a laminate having a layer configuration of "flame retardant layer / fiber-reinforced resin layer" or a layer configuration of "flame retardant layer / fiber-reinforced resin layer / flame retardant layer", for example.

The battery case may further contain an electromagnetic wave-shielding layer. In the case where the battery case further contains an electromagnetic wave-shielding layer, it is preferred that the laminate contains the electromagnetic wave-shielding layer. The electromagnetic wave-shielding layer in the battery case has the same meaning as the electromagnetic wave-shielding layer in the above-described laminate, and preferred aspects are also the same.

In the battery case, the above-described flame retardant layer and the above-described fiber-reinforced resin layer may be laminated in contact with each other, or the above-described electromagnetic wave-shielding layer may be laminated between the above-described flame-retardant layer and the above-described fiber-reinforced resin layer.

From the viewpoint of preventing leakage of electromagnetic wave noise generated from a lithium ion battery or other sources to the outside, it is preferred that the above-described electromagnetic wave-shielding layer is laminated between the flame retardant layer and the fiber-reinforced resin layer, and it is more preferred that the electromagnetic wave-shielding layer is laminated between the flame retardant layer and the fiber-reinforced resin layer, and that the flame retardant layer and the fiber-reinforced resin layer are laminated in contact with each other.

The battery case may further include other layers other than the electromagnetic wave-shielding layer on the side opposite to the flame retardant layer (that is, on top of the above-described fiber-reinforced resin layer).

Examples of the other layers include a protective layer. Examples of the protective layer include a layer composed of the above-described thermoplastic resin.

For the battery case, the fiber-reinforced resin layer or the flame retardant layer in the above-described laminate may contain an electromagnetic wave-shielding filler.

The electromagnetic wave-shielding filler in the battery case has the same meaning as the electromagnetic wave-shielding filler in the above-described laminate, and preferred aspects are also the same.

There are no particular restrictions on the shape of the battery case as long as it can accommodate a secondary battery, and it may be rectangular (flat rectangular), may be cylindrical, or may be bag-shaped, for example.

The battery case may include an external terminal, an injection hole, a gas discharge valve, and a current interrupt device (CID).

### <<Method for fabricating battery case>>

There are no particular restrictions on the method for molding the battery case, and a known molding method can be applied. For example, it can be obtained by performing molding by the blow molding method, injection molding method, press molding method, extrusion molding method, extrusion blow molding method, injection blow molding method, vacuum molding method, and other methods. Among the above-described molding methods, the battery case is preferably molded by the injection molding method.

### <Non-aqueous electrolyte secondary battery>

A non-aqueous electrolyte secondary battery according to the present invention includes the above-described battery case for a non-aqueous electrolyte secondary battery.

The non-aqueous electrolyte secondary battery can include a conventionally known non-aqueous electrolyte secondary battery as long as it includes the above-described battery case. Examples of the configuration of a conventionally known non-aqueous electrolyte secondary battery include a configuration including an electrode body having a positive electrode, a negative electrode, and a separator arranged between the positive electrode and the negative electrode, wherein the electrode body is arranged in a battery case together with a non-aqueous electrolyte.

Suitable examples of the non-aqueous electrolyte secondary battery include a lithium ion secondary battery containing a non-aqueous electrolyte.

### <<Positive electrode>>

The positive electrode preferably contains a positive electrode current collector and a positive electrode mixture layer formed on the main surface of the positive electrode current collector. The positive electrode current collector may be, for example, aluminum (Al) foil or other materials. The Al foil may be pure Al foil or may be Al alloy foil. The positive electrode current collector may have a thickness of 10 to 30 µm, for example.

### <<Positive electrode mixture layer>>

The positive electrode mixture layer preferably contains a positive electrode active material, a conductive material, and a binder. The positive electrode mixture layer may contain, for example, 80 to 98% by mass of a positive electrode active material, 1 to 15% by mass or less of a conductive material, and 1 to 5% by mass or less of a binder. The positive electrode mixture layer may have a thickness of 100 to 200 µm, for example.

### <<Positive electrode active material, conductive material, and binder>>

There are no particular limitations on the positive electrode active material, conductive material, and binder.

The positive electrode active material may be, for example, LiCoO₂, LiNiO₂, LiNi_{1/3}Co_{1/3}Mn_{1/3}O₂ (NCM: nickel cobalt manganese oxide), LiMnO₂, LiMn₂O₄, LiFePO₄, or other materials.

The conductive material may be, for example, acetylene black (AB), furnace black, vapor-grown carbon fibers (VGCF), graphite, or other materials.

The binder may be, for example, PVDF (polyvinylidene fluoride), PTFE (polytetrafluoroethylene), or other materials.

### <<Negative electrode>>

The negative electrode preferably contains a negative electrode current collector and a negative electrode mixture layer formed on the main surface of the negative electrode current collector. The negative electrode current collector may be, for example, copper (Cu) foil or other materials. The negative electrode current collector may have a thickness of about 5 to 20 µm, for example.

### <<Negative electrode mixture layer>>

The negative electrode mixture layer preferably contains a negative electrode active material and a binder. The negative electrode mixture layer may contain, for example, 95 to 99% by mass of a negative electrode active material and 1 to 5% by mass of a binder. The negative electrode mixture layer may have a thickness of about 50 to 150 µm, for example.

### <<Negative electrode active material and binder>>

There are no particular limitations on the negative electrode active material and binder. The negative electrode active material may be, for example, graphite, easily graphitizable carbon, hardly graphitizable carbon, silicon, silicon oxide, tin, tin oxide, or other materials. These may also be subjected to a coating treatment with amorphous carbon. The binder may be, for example, carboxymethyl cellulose (CMC), styrene butadiene rubber (SBR), or other materials.

### <<Non-aqueous electrolyte>>

The non-aqueous electrolyte contains a lithium salt, an additive, and a solvent. The lithium salt may be, for example, LiPF₆, LiFSI, or other materials. The additive may be, for example, Li[B(C₂O₄)], LiPO₂F₂, vinylene carbonate (VC), vinylethylene carbonate (VEC), fluoroethylene carbonate (FEC), ethylene sulfite (ES), propanesultone (PS), lithium bis(trifluoromethanesulfonyl)imide (LiTFSI), LiBF₂(C₂O₄), LiPF₂(C₂O₄)₂, or other materials. The solvent may be, for example, a mixture of a cyclic carbonate and a chain carbonate.

The mixing ratio between the cyclic carbonate and the chain carbonate may be, for example, cyclic carbonate:chain carbonate = 1:9 to 5:5 on a volume basis. The cyclic carbonate may be, for example, ethylene carbonate (EC), propylene carbonate (PC), butylene carbonate (BC), or others. The chain carbonate may be, for example, dimethyl carbonate (DMC), ethyl methyl carbonate (EMC), diethyl carbonate (DEC), or others.

### <<Separator>>

Suitable examples of the separator include a microporous membrane of, for example, polyethylene (PE), polypropylene (PP), or other materials. The separator may have a monolayer structure of PE or may have a three-layer structure in which the PP membrane, PE membrane, and PP membrane are laminated in this order. The separator may have a thickness of about 9 to 30 µm, for example. In the case where the separator has the above-mentioned three-layer structure, the thickness of the PE layer may be, for example, about 3 to 10 µm, and the thickness of the PP layer may be, for example, about 3 to 10 µm. The pore size and porosity of the separator may be adjusted as appropriate such that the air permeability is at the desired value.

Also, the separator may be one in which a plurality of microporous membranes are laminated, or may be one in which a heat-resistant layer containing an inorganic filler and a binder is formed on its surface. The inorganic filler contained in the heat-resistant layer may be, for example, alumina, baemite, titania, zirconia, magnesia, or other materials. The binder contained in the heat-resistant layer may be, for example, PVdF, aramid, SBR, PTFE, or other materials. The amount of the binder contained in the heat-resistant layer may be 2 to 30% by mass, and the thickness of the heat-resistant layer may be, for example, about 3 to 10 µm.

### Examples

Hereinafter, the present invention will be described further specifically based on Examples, but the present invention is not limited to these Examples.

Measurement methods for various physical properties are as follows.

### (Raw materials)

· Homopolypropylene: trade name J137G (manufactured by Prime Polymer Co., Ltd., MFR in accordance with ASTM D1238 at 230°C with a load of 2.16 kg: 30 g/10 min)
· Glass fiber masterbatch: brand name Mostron L-5071PL9 (manufactured by Prime Polymer Co., Ltd., amount of glass fibers: 50% by mass, polypropylene 50% by mass)
· Carbon fiber masterbatch: masterbatch containing 40% by mass of carbon fibers, 54% by mass of polypropylene, and 6% by mass of polyamide, prepared in the Production Example 2 below
· Phosphorus-based flame retardant masterbatch: brand name MB32B (manufacturer: Hangzhou JLS Flame Retardants Chemical Co., Ltd.), phosphorus-based flame retardant (melamine polyphosphate: concentration 39% by mass, polyphosphoric acid salt, compound: concentration 36% by mass): 75% by mass, polypropylene (PP): 25% by mass
· Bromine-based flame retardant masterbatch: brand name Daifunen EH931 (manufacturer: manufactured by Dainichiseika Color & Chemicals Mfg. Co., Ltd.), bromine-based flame retardant (ethylene bispentabromobiphenyl: concentration 54% by mass, antimony trioxide: concentration 21% by mass, polyethylene (PE): 25% by mass)
· Carbon nanotube masterbatch: masterbatch containing 15% by mass of carbon nanotubes, 83% by mass of polypropylene, and 2% by mass of dispersing agent, stabilizer, and processing stabilizer in total, prepared in the Production Example 1 below

### <Production Example 1>

### (Production of carbon nanotube masterbatch)

A carbon nanotube masterbatch was produced by the following method using the following materials.

### - Raw materials -

. Multiwalled carbon nanotubes: "NC7000" manufactured by Nanocyl SA (average diameter: 9.5 mm, average length: 1.5 µm, form: powder, layer configuration: multilayer)
· Polypropylene: "Prime Polypro (R) J707G" manufactured by Prime Polymer Co., Ltd.
· Dispersing agent: "L-MODU S400" (low stereoregular polyolefin, Mw = 45,000, (Mw/Mn) = 2, softening point: 93°C) manufactured by Idemitsu Kosan Co., Ltd.
· Hindered phenol-based antioxidant ("Irganox 1010" manufactured by BASF Japan Ltd., chemical formula: pentaerythritol tetrakis[3-(3,5-di-tert-butyl-4-hydroxyphenyl)propionate])
· Phosphorus-based processing stabilizer ("Irgafos 168" manufactured by BASF Japan Ltd., chemical formula: tris(2,4-di-tert-butylbenzene) phosphite)

### - Production method -

91% by mass of the multiwalled carbon nanotubes and 9% by mass of the dispersing agent were fed to an FM mixer ("FM10C/I" manufactured by Nippon Coke & Engineering Co., Ltd., capacity: 9 L). They were stirred under the conditions of a stirring temperature of 140°C, a stirring time of 60 minutes, and a screw rotation speed of 1000 rpm. This resulted in a mixed powder.

Next, 16.5% by mass of the mixed powder and 83.5% by mass of the polypropylene were dry-blended to obtain a dry-blended product. Specifically, the mixed powder and the polypropylene were fed to a twin screw extruder ("TEM-35B" manufactured by Toshiba Machine Co., Ltd., screw diameter: 35 mm; L/D: 32, vented), and a strand-like material with a diameter of 3 mm was obtained from the outlet of the twin screw extruder. The strand-like material was placed in a water tank to cool and cut with a strand cutter. This resulted in pellets, a dry-blended product.

99.6 parts by mass of the obtained pellets, 0.2% by mass of the hindered phenol-based antioxidant, and 0.2% by mass of the phosphorus-based processing stabilizer were fed to a kneading extruder ("KZW-15TW" manufactured by Technovel Corporation, screw diameter: 15 mmϕ), and kneading granulation was performed under the conditions at a kneading temperature of 230°C and a screw rotation speed of 100 rpm. This resulted in a carbon nanotube masterbatch.

### <Production Example 2>

### (Production of carbon fiber masterbatch)

A carbon fiber masterbatch was produced by the following method using the following materials.

### - Raw materials -

· Carbon fiber: "TENAX (R) HTS40 12K" manufactured by Toho Tenax Co., Ltd., density: 1.79 g/cm³)
· Polypropylene: homopolypropylene manufactured by Prime Polymer Co., Ltd., where MFR in accordance with ASTM D1238 at 230°C with a load of 2.16 kg is 220 g/10 min
· Polyamide: Polyamide 12 "UBESTA (R) 3012U" manufactured by Ube Industries, Ltd. (melting point: 180°C, MFR: 17 g/10 min (the value measured in accordance with ISO 1133 at 190°C with a load of 1000 g))
· Acid-modified polyolefin resin: "ADMER QE800" manufactured by Mitsui Chemicals, Inc.

### - Production method -

76.4 parts by mass, 10.0 parts by mass, and 13.6 parts by mass of the above-described polypropylene, polyamide, and acid-modified polyolefin as matrix resin components, respectively, were fed to the hopper of a screw-type extruder whose temperature was controlled at 250°C. Also, the above-described carbon fiber roving was opened through a fiber opening step, and the resin from the extruder and the carbon fiber were supplied to an impregnation die to obtain strands with a diameter of 1 mm such that the content of carbon fibers was 40% by mass. After cooling solidification, a carbon fiber masterbatch was obtained with a strand cutter.

### (Examples 1 to 8)

The above-described raw materials were subjected to doublemolding at the compounding ratios described in Table 1 using an injection molding machine having two barrels, a main unit and a subunit (manufactured by The Japan Steel Works, Ltd., 180t injection molding machine), and a flat plate specimen was molded. Specifically, the raw materials for the flame retardant layer were fed to the main unit and the raw materials for the fiber-reinforced resin layer were fed to the subunit. The molding conditions were as follows: barrel temperature 240°C, injection speed 15 mm/s, back pressure 8 MPa (main unit side), 3 MPa (subunit side), and mold temperature 60°C. Injection was performed on the subunit side, then the moving side of the mold was retracted to create a space in the mold for molding the second layer, and injection was performed on the main unit side to obtain a two-layer flat plate laminate having the flame retardant layer and the fiber-reinforced resin layer. The dimensions of the flat plate laminate were 13 cm × 10 cm. The thickness of each layer is as shown in Table 1.

### (Comparative Examples 1 and 2)

The above-described raw materials were dry-blended at the ratios described in Table 2 to obtain a raw material mixture. This raw material mixture was fed only to the main unit of an injection molding machine (180t injection molding machine manufactured by The Japan Steel Works, Ltd.), and injection molding was performed only from the main unit without using the subunit at a barrel temperature of 240°C, injection speed of 15 mm/s, back pressure of 3 MPa, and mold temperature of 60°C to obtain a monolayer molded product of 13 cm × 10 cm.

**[Table 1]**

| | | Example 1 | Example 2 | Example 3 | Example 4 | Example 5 | Example 6 | Example 7 | Example 8 |
|---|---|---|---|---|---|---|---|---|---|
| Flame retardant layer raw materials | PP (J137G) [wt%] | 40 | 40 | 20 | 0 | 40 | 20 | 0 | 0 |
| | Type of flame retardant masterbatch | MB32B | MB32B | MB32B | MB32B | MB32B | EH931 | EH931 | EH931 |
| | Flame retardant masterbatch [wt%] | 60 | 60 | 80 | 100 | 60 | 80 | 100 | 100 |
| Fiber-reinforced resin layer raw materials | Glass fiber masterbatch [wt%] Carbon fiber masterbatch [wt%] | 100 0 | 100 0 | 100 0 | 100 0 | 0 100 | 100 0 | 100 0 | 100 0 |
| Compositional features of flame retardant layer | Flame retardant type | Phosphorus-based | Phosphorus-based | Phosphorus-based | Phosphorus-based | Phosphorus-based | Bromine-based | Bromine-based | Bromine-based |
| | PP [wt%] | 55 | 55 | 40 | 25 | 55 | 0 | 0 | 0 |
| | PE [wt%] | 0 | 0 | 0 | 0 | 0 | 40 | 25 | 25 |
| | Flame retardant component [wt%] | 45 | 45 | 60 | 75 | 45 | 60 | 75 | 75 |
| | Thickness [mm] | 1 | 1 | 1 | 1 | 1 | 1 | 1 | 1 |
| Compositional features of fiber-reinforced resin layer | PP [wt%] | 50 | 50 | 50 | 50 | 54 | 50 | 50 | 50 |
| | PA [wt%] | 0 | 0 | 0 | 0 | 6 | 0 | 0 | 0 |
| | GF [wt%] | 50 | 50 | 50 | 50 | 0 | 50 | 50 | 50 |
| | CF [wt%] | 0 | 0 | 0 | 0 | 40 | 0 | 0 | 0 |
| | Thickness [mm] | 1.5 | 4 | 1.5 | 1.5 | 4 | 1.5 | 1.5 | 1.5 |
| Total thickness [mm] | | 2.5 | 5 | 2.5 | 2.5 | 5 | 2.5 | 2.5 | 2.5 |
| Flame retardancy: UL94 5V flat plate | | OK | OK | OK | OK | OK | OK | OK | OK |
| Notched Charpy impact strength [kJ/m²] | | 9 | 30 | 8 | 8 | 42 | 9 | 9 | 9 |
| Unnotched Charpy impact strength [kJ/m²] | | 18 | 77 | 11 | 13 | 73 | 15 | 14 | 14 |

In Table 1 and Table 2, "PP" represents the polypropylene resin, "PA" represents the polyamide, "GF" represents the glass fibers, "CF" represents the carbon fibers, and "PE" represents the polyethylene.

**[Table 2]**

| | | Comparative Example 1 | Comparative Example 2 |
|---|---|---|---|
| Raw materials | PP (J137G) [wt%] | 14.6 | 14.6 |
| | Type of flame retardant masterbatch | MB32B | MB32B |
| | Flame retardant masterbatch [wt%] | 21.9 | 21.9 |
| | Glass fiber masterbatch [wt%] | 63.5 | 63.5 |
| Compositional features of flame retardant and fiber-reinforced resin layer (monolayer product) | Flame retardant type | Phosphorus-based | Phosphorus-based |
| | Flame retardant component [wt%] | 16.4 | 16.4 |
| | PP [wt%] | 51.8 | 51.8 |
| | GF [wt%] | 31.8 | 31.8 |
| | Thickness [mm] | 2.5 | 4 |
| Flame retardancy: UL94 5V flat plate | | NG | NG |
| Notched Charpy impact strength [kJ/m²] | | 15 | 13 |
| Unnotched Charpy impact strength [kJ/m²] | | 25 | 23 |

For the flat plate laminates and monolayer molded products obtained in Examples 1 to 8 and Comparative Examples 1 and 2, the physical properties were measured and evaluated by the following methods.

### <<Evaluation>>

### [Methods for measuring physical properties]

### (1) Mechanical properties: Charpy impact strength

From the flat plate laminates and monolayer molded bodies obtained in Examples 1 to 8 and Comparative Examples 1 and 2, strip specimens (dimensions: 80 mm × 10 mm × 2.5 mmt) were fabricated by cutting. For the fabricated specimens, the impact strength of each was measured using the impact tester with thermostatic tank DG-UB model (manufactured by Toyo Seiki Seisaku-sho, Ltd.), which is a Charpy impact tester. The results obtained are shown in Table 1 and Table 2.

The measurement conditions for the impact test were as follows: test temperature 23°C, hammer capacity 4 J (notched specimen), and 15 J (unnotched specimen).

Measurement of the Charpy impact strength was made in accordance with JIS K7111-1 and JIS K7111-2. A larger value of Charpy impact strength can be said to indicate excellent impact resistance strength.

### (2) Flame retardancy (UL94 5V)

The above-described flat plate specimens were subjected to a combustion test in accordance with the UL94 5V standard. The central part of the flame retardant layer of the specimens was brought into contact with flame and checked to see if a hole was formed. The case where a hole was not formed was considered acceptable (OK), and the case where a hole was formed was considered unacceptable (NG).

As shown in Tables 1 and 2, the laminates of Comparative Examples 1 and 2 failed the test due to inferior flame retardancy, whereas the laminates of Examples 1 to 8 according to the present invention had excellent flame retardancy and also exhibited sufficiently excellent impact resistance.

### (Examples 9 and 10)

In the same manner as in Example 1 except that the raw materials and compounding ratios were changed as described in Table 3, two-layer flat plate laminates having the flame retardant and electromagnetic wave-shielding layer and the fiber-reinforced resin layer were obtained.

For the flat plate laminates and monolayer molded bodies obtained in Examples 9 and 10, the following tensile strength, tensile modulus, flexural strength, flexural modulus, electromagnetic wave-shielding properties, and the above-mentioned Charpy impact strength were measured. The results for each are shown in Table 3.

### (3) Mechanical properties: tensile strength and tensile modulus

From the flat plate laminates and monolayer molded bodies obtained in Examples 9 and 10, dumbbell specimens (JIS K7161-2 type 1BA) were fabricated by cutting. For the fabricated specimens, the tensile strength and tensile modulus were measured using the tensile tester AG-20kN XD Plus (manufactured by Shimadzu Corporation). The results are shown in Table 3.

The measurement conditions for the tensile test were as follows: test temperature 23°C, tensile speed 2 mm/min, and distance between benchmarks 25 mm.

The measurement of tensile strength and tensile modulus is in accordance with JIS K7161. A larger value of tensile strength indicates that the force required to break the specimen in the tensile mode is greater. A larger value of tensile modulus indicates greater hardness of the specimen in the tensile mode.

### (4) Mechanical properties: flexural strength and flexural modulus

From the flat plate laminates and monolayer molded bodies obtained in Examples 9 and 10, strip specimens (dimensions: 80 mm × 10 mm × 2.5 mmt) were fabricated by cutting. For the fabricated specimens, the flexural strength and flexural modulus were measured using the flexural tester AG-1kN X plus (manufactured by Shimadzu Corporation). The results of each are shown in Table 3.

The measurement conditions for the flexural test were as follows: test temperature 23°C, flexural speed 2 mm/min, and distance between spans 64 mm.

The measurement of flexural strength and flexural modulus is in accordance with JIS K7171. A larger value of flexural strength indicates that the force required to break the specimen in the flexural mode is greater. A larger value of tensile modulus indicates greater hardness of the specimen in the flexural mode.

### (6) Evaluation of electromagnetic wave-shielding properties

For the flat plate laminates and molded bodies (13 cm × 10 cm) obtained in Examples 9 and 10, the electromagnetic wave-shielding performance (dB) was quantitatively evaluated by the KEC method.

The KEC method refers to a method for measuring electromagnetic wave-shielding performance in the near field, developed by the KEC Electronic Industry Development Center. The electromagnetic wave-shielding performance quantified by the KEC method is expressed as the difference between the reception intensity when the sample is sandwiched and the reception intensity when the sample is not sandwiched.

The measurement apparatus used was the electric field-shielding effect evaluation apparatus of the KEC Electronic Industry Development Center. The measured values when the measurement frequency was set to 100 kHz, 10 MHz, and 1 GHz are each shown in Table 3.

As shown in Table 3, the flat plate laminates of Examples 9 and 10 can impart electromagnetic wave-shielding properties without reducing flame retardancy. Note that, just to be sure, flat plate laminates with no electromagnetic wave-shielding component usually have low electromagnetic wave-shielding properties, and exhibit 0 db at each of the frequencies of 100 kHz, 10 MHz, and 1 GHz.

**[Table 3]**

| | | Example 9 | Example 10 |
|---|---|---|---|
| Flame retardant and electromagnetic wave-shielding layer raw materials | PP (J137G) [wt%] | 0 | 0 |
| | Type of flame retardant masterbatch | MB32B | MB32B |
| | Flame retardant masterbatch [wt%] | 40 | 50 |
| | Glass fiber masterbatch [wt%] | 30 | 20 |
| | Carbon nanotube masterbatch [wt%] | 30 | 30 |
| Fiber-reinforced resin layer raw materials | Glass fiber masterbatch [wt%] | 100 | 100 |
| | Carbon fiber masterbatch | 0 | 0 |
| Compositional features of flame retardant and electromagnetic wave-shielding layer | Flame retardant type | Phosphorus-based | Phosphorus-based |
| | PP [wt%] | 50.5 | 48 |
| | PE [wt%] | 0 | 0 |
| | Flame retardant component [wt%] | 30 | 37.5 |
| | Glass fibers [wt%] | 15 | 10 |
| | Carbon nanotubes [wt%] | 4.5 | 4.5 |
| | Thickness [mm] | 1 | 1 |
| Compositional features of fiber-reinforced resin layer | PP [wt%] | 50 | 50 |
| | PA [wt%] | 0 | 0 |
| | GF [wt%] | 50 | 50 |
| | CF [wt%] | 0 | 0 |
| | Thickness [mm] | 1.5 | 1.5 |
| Total thickness [mm] | | 2.5 | 2.5 |
| Electromagnetic wave-shielding properties _ KEC method [dB] | 100kHz | 26 | 26 |
| | 10MHz | 50 | 50 |
| | 1GHz | 16 | 16 |
| Tensile strength [MPa] | | 67 | 70 |
| Tensile modulus [GPa] | | 7.5 | 7.7 |
| Flexural strength [MPa] | | 103 | 109 |
| Flexural modulus [GPa] | | 5.7 | 6 |
| Notched Charpy impact strength [kJ/m²] | | 12 | 13 |
| Unnotched Charpy impact strength [kJ/m²] | | 19 | 18 |

### (5) Flame retardancy (burner test)

The flat plate center of the flat plate laminates obtained in Examples 1 to 6, 9, and 10 on the flame retardant layer side was heated by a Bunsen burner with 1000°C flame for 5 minutes. Thereafter, the condition was visually observed and evaluated according to the following evaluation criteria. The results are shown in Table 4. Note that the burner test is a test with very high intensity compared to the UL94 5V flame retardancy test, and even NG evaluation does not immediately mean that the flame retardancy is low. If the test result of UL94 5V is OK, it indicates excellent flame retardancy, and if the test result of the burner test is also OK, it indicates extraordinarily excellent flame retardancy.

### <Evaluation criteria>

OK: No hole was formed in the flat plate laminate.
NG: A hole was formed in the flat plate laminate.

**[Table 4]**

| | | Example 1 | Example 2 | Example 3 | Example 4 | Example 5 | Example 6 | Example 9 | Example 10 |
|---|---|---|---|---|---|---|---|---|---|
| Flame retardant and electromagnetic wave-shielding layer | Flame retardant type | Phosphorus-based | Phosphorus-based | Phosphorus-based | Phosphorus-based | Phosphorus-based | Bromine-based | Phosphorus-based | Phosphorus-based |
| | Flame retardant component [wt%] | 45 | 45 | 60 | 75 | 45 | 60 | 30 | 37.5 |
| | Thickness [mm] | 1 | 1 | 1 | 1 | 1 | 1 | 1 | 1 |
| Fiber-reinforced resin layer | Thickness [mm] | 1.5 | 4 | 1.5 | 1.5 | 4 | 1.5 | 1.5 | 1.5 |
| Total thickness [mm] | | 2.5 | 5 | 2.5 | 2.5 | 5 | 2.5 | 2.5 | 2.5 |
| Flame retardancy: UL94 5V flat plate | | OK | OK | OK | OK | OK | OK | OK | OK |
| Bumer test flat plate 5 min | | OK | OK | OK | OK | OK | NG | OK | OK |

## Claims

1. A laminate comprising a flame retardant layer and a fiber-reinforced resin layer, wherein
the flame retardant layer comprises 20% by mass to 80% by mass of a thermoplastic resin based on the total mass of the flame retardant layer, and 20% by mass to 80% by mass of at least one flame retardant selected from the group consisting of a phosphorus-based flame retardant, a bromine-based flame retardant, and an inorganic hydrate-based flame retardant based on the total mass of the flame retardant layer, and has a content of reinforcing fibers of 0% by mass to 20% by mass based on the total mass of the flame retardant layer, and
the fiber-reinforced resin layer comprises 30% by mass to 90% by mass of a thermoplastic resin based on the total mass of the fiber-reinforced resin layer, and 10% by mass to 70% by mass of reinforcing fibers based on the total mass of the fiber-reinforced resin layer.

2. The laminate according to claim 1, wherein the content of reinforcing fibers contained in the fiber-reinforced resin layer is larger than the content of reinforcing fibers contained in the flame retardant layer by 10% by mass or more.

3. The laminate according to claim 1, wherein the content of at least one flame retardant selected from the group consisting of a phosphorus-based flame retardant, a bromine-based flame retardant, and an inorganic hydrate-based flame retardant in the fiber-reinforced resin layer is 0% by mass or more and less than 20% by mass based on the total mass of the fiber-reinforced resin layer.

4. The laminate according to claim 1, wherein the flame retardant layer comprises 40% by mass to 80% by mass of the flame retardant based on the total mass of the flame retardant layer, and
the fiber-reinforced resin layer comprises 40% by mass to 60% by mass of the reinforcing fibers based on the total mass of the fiber-reinforced resin layer, and has a content of at least one flame retardant selected from the group consisting of a phosphorus-based flame retardant, a bromine-based flame retardant, and an inorganic hydrate-based flame retardant of 0% by mass to 10% by mass based on the total mass of the fiber-reinforced resin layer.

5. The laminate according to claim 1, wherein the fiber-reinforced resin layer comprises at least one resin selected from the group consisting of a polypropylene resin and a polyamide resin as the thermoplastic resin.

6. The laminate according to claim 1, wherein the reinforcing fibers comprise at least one type of fibers selected from the group consisting of carbon fibers and glass fibers.

7. The laminate according to claim 1, wherein at least one layer of the fiber-reinforced resin layer and the flame retardant layer comprises an electromagnetic wave-shielding filler.

8. The laminate according to claim 1, wherein the fiber-reinforced resin layer has a thickness of 0.5 to 30 mm.

9. A battery case for a non-aqueous electrolyte secondary battery, using the laminate according to any one of claims 1 to 8.

10. The battery case for a non-aqueous electrolyte secondary battery according to claim 9, wherein the flame retardant layer in the laminate is arranged inside the battery case.

11. The battery case for a non-aqueous electrolyte secondary battery according to claim 9, wherein the flame retardant layer in the laminate is arranged inside and outside the battery case.

12. The battery case for a non-aqueous electrolyte secondary battery according to claim 9, further comprising an electromagnetic wave-shielding layer.

13. A non-aqueous electrolyte secondary battery comprising the battery case for a non-aqueous electrolyte secondary battery according to claim 9.
